# EUROPÄISCHE PATENTSCHRIFT

(11) **EP 0 654 443 B1**
(45) Veröffentlichungstag und Bekanntmachung des Hinweises auf die Patenterteilung: **15.07.1998**
(21) Anmeldenummer: 94203176.6
(22) Anmeldetag: 02.11.1994
(51) Int. Cl.: C01C 1/10, C02F 1/58

(54) **Verfahren zum Gewinnen von Ammoniak aus einem NH3 und Sauergase enthaltenden Abwasser**
Process for recovering ammonia from an ammonia and acid gases containing wastewater
Procédé pour récuperer de l'ammoniac à partir de l'eau usée contenant NH3 et des gaz acides

(30) Priorität: 19.11.1993 DE 4339519
(43) Veröffentlichungstag der Anmeldung: 24.05.1995
(73) Patentinhaber: METALLGESELLSCHAFT AKTIENGESELLSCHAFT, 60323 Frankfurt am Main (DE)
(72) Erfinder: Stönner, Hans-Martin, D-65760 Eschborn (DE); Ungar, Gert, D-60598 Frankfurt am Main (DE); Schlauer, Johann, Dr., D-60594 Frankfurt am Main (DE)

(56) Entgegenhaltungen:
- EP-A- 0 122 315
- EP-A- 0 212 690
- DE-A- 1 948 428
- DE-A- 3 517 531
- DE-A- 3 735 868
- US-A- 3 595 615

## Beschreibung

Die Erfindung betrifft ein Verfahren zur Entsäuerung eines wäßrigen Kondensats, das Ammoniak und mindestens eines der Sauergase H₂S und CO₂ enthält, wobei man aus dem Kondensat in einer im unteren Bereich beheizten Entsäuerungskolonne bei einem Druck von 2 bis 30 bar Sauergase mit Wasserdampf austreibt und im oberen Bereich der Entsäuerungskolonne aufsteigende Gase und Dämpfe mit Waschwasser in direkten Kontakt bringt, man am Kopf der Entsäuerungskolonne weitgehend ammoniakfreies Sauergas mit einem NH₃-Gehalt von höchstens 1,0 Vol.-%, H₂O-frei gerechnet, ableitet, und aus dem mittleren Bereich der Entsäuerungskolonne durch einen Seitenabzug unterhalb des Zulaufs des Kondensats ein NH₃-reiches Gas- und Dampfgemisch abzieht.

Ein solches Verfahren ist aus DE-A-19 48 428 bekannt. Beim bekannten Verfahren arbeitet man ohne eine NH₃-Reinigungskolonne, und man führt NH₃-reiches Kondensat zurück in die Entsäuerungskolonne. Das aus EP-A-212 690 bekannte Verfahren verwendet eine Totalabtreibekolonne zum totalen Austreiben der Sauergase und des NH₃, die man am Kopf der Kolonne abzieht und zunächst durch einen Kondensator leitet. Die NH₃-reiche Flüssigphase aus dem Kondensator gibt man einer NH₃-Abtreibekolonne auf und gewinnt als Kopfprodukt ein NH₃-reiches Gasgemisch, das man mindestens zweistufig wäscht. Das Sumpfproduct der NH₃-Abtreibekolonne wird in einer Entsäuerungskolonne behandelt, aus der das gesamte Sauergas als Kopfprodukt ausgeschleust wird.

Der Erfindung liegt die Aufgabe zugrunde, das Austreiben der Sauergase aus dem Kondensat sowie auch die NH₃-Gewinnung in einer möglichst einfachen Anlage durchzuführen. Beim eingangs genannten Verfahren gelingt dies erfindungsgemäß dadurch, daß man das NH₃-reiche Gas- und Dampfgemisch durch den Seitenabzug mit einer Temperatur im Bereich von 110 bis 200°C abzieht, das Gas- und Dampfgemisch soweit kühlt, daß mindestens 90 Vol.-% des Gemisches kondensieren, wobei ammoniakreiches Kondensat und ein Restgasstrom gebildet werden, daß man das ammoniakreiche Kondensat einer NH₃-Reinigungskolonne aufgibt, die im unteren Bereich beheizt wird und in welcher ein Druck im Bereich von 1 bis 10 bar herrscht, daß man im oberen Bereich der NH₃-Reinigungskolonne aufsteigende Gase und Dämpfe mit wäßrigem Ammoniak in direkten Kontakt bringt und am Kopf der Reinigungskolonne NH₃ weitgehend frei von Sauergasen ableitet, daß man aus dem Sumpf der NH₃-Reinigungskolonne eine Lösung mit einer Temperatur im Bereich von 50 bis 100°C abzieht, die man in die Entsäuerungskolonne leitet, und daß man den Restgasstrom in die Entsäuerungskolonne leitet.

Das erfindungsgemäße Verfahren basiert auf der Verwendung von nur zwei Kolonnen, der Entsäuerungskolonne und der NH₃-Reinigungskolonne. In der NH₃-Reinigungskolonne ist der Druck üblicherweise um mindestens 1 bar und vorzugsweise um mindestens 2 bar niedriger als in der Entsäuerungskolonne. Vorzugsweise liegt der Druck in der Entsäuerungskolonne im Bereich von 4 bis 15 bar und in der NH₃-Reinigungskolonne im Bereich von 2 bis 5 bar.

Das durch den Seitenabzug der Entsäuerungskolonne strömende NH₃-reiche Gas- und Dampfgemisch weist vorzugsweise eine Temperatur im Bereich von 140 bis 170°C auf. Dieses Gas- und Dampfgemisch kann durch indirekte Kühlung weitgehend kondensiert werden. Alternativ kann man das Gas- und Dampfgemisch durch direkten Kontakt mit im Kreislauf geführtem, ammoniakreichem Kondensat kühlen, wobei man Restgas ableitet. Auf alle Fälle wird der NH₃-Reinigungskolonne Ammoniak in Form eines Kondensats zugeführt. Der bei der Ausbildung des Kondensats verbleibende Restgasstrom wird in die Entsäuerungskolonne üblicherweise oberhalb des Seitenabzugs eingeleitet. Dadurch wird das in diesem Restgas enthaltene NH₃ zurückgewonnen, während die in ihm eventuell noch enthaltenen flüchtigen Komponenten wie Kohlenwasserstoffe, organische Schwefelverbindungen oder Lösemittel zurück in die Entsäuerungskolonne gelangen.

Die Entsäuerungskolonne kann durch indirekten Wärmeaustausch oder aber durch die direkte Zufuhr von Wasserdampf beheizt werden. Wenn man mit direkter Zufuhr von Wasserdampf beheizt, betreibt man die Entsäuerungskolonne vorzugsweise bei einem Druck, der dem zur Verfügung stehenden Heizdampfdruck entspricht. Bei der Beheizung durch indirekten Wärmeaustausch mit kondensierendem Wasserdampf wird die Kolonne zweckmäßigerweise bei einem Druck betrieben, bei dem sich eine Sumpftemperatur einstellt, die 1 bis 100°C und vorzugsweise 15 bis 30°C unter der Sättigungstemperatur des zur Verfügung stehenden Heizdampfes liegt.

Mindestens 90 Vol.-% des NH₃-reichen Gas- und Dampfgemisches werden durch Kühlen vor dem Einleiten in die NH₃-Abtreibekolonne kondensiert, und es ist durchaus möglich, mindestens 95 Vol.-% des NH₃-reichen Gas- und Dampfgemisches zu kondensieren.

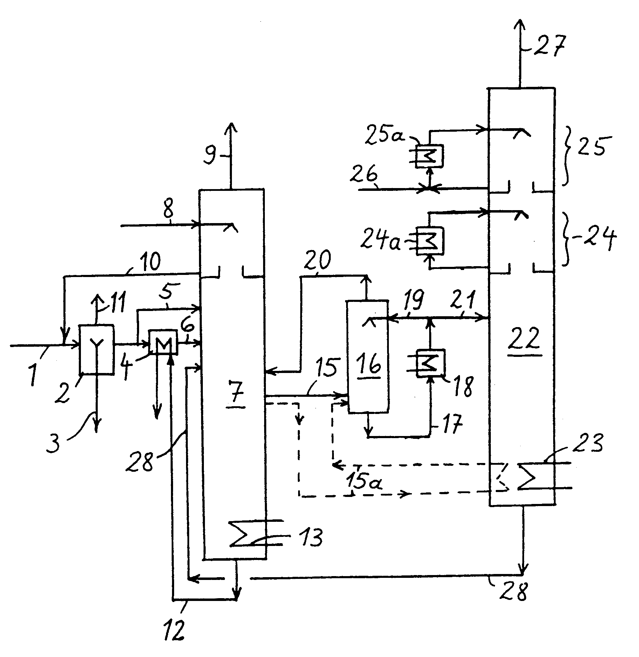

Ausgestaltungsmöglichkeiten des Verfahrens werden mit Hilfe der Zeichnung erläutert.

Das zu behandelnde Kondensat, das z. B. aus einer Raffinerie stammt, wird in der Leitung (1) herangeführt und zunächst durch einen Abscheider (2) geleitet, aus dem man in der Leitung (3) Lösemittel und/oder Kohlenwasserstoffe abzieht. Der Abscheider (2) arbeitet z. B. nach dem Schwerkraftprinzip. Das wäßrige Kondensat wird dann teilweise im Wärmeaustauscher (4) erwärmt, während ein kalter Teilstrom durch die Leitung (5) direkt in die Entsäuerungskolonne (7) geleitet wird. Der erwärmte Teilstrom des Kondensats gelangt in der Leitung (6) in die Kolonne (7).

Im oberen Bereich der Kolonne (7) werden die aufsteigenden Gase und Dämpfe mit Waschwasser aus der Leitung (8) in direkten Kontakt gebracht. Dieses Waschwasser verringert den NH₃-Gehalt im Kopfgas, das man in der Leitung (9) abzieht. Dieses Kopfgas besteht vor allem aus den Sauergasen H₂S und CO₂ sowie aus Inertgasen, wobei der NH₃-Gehalt, H₂O-frei gerechnet, höchstens 1,0 Vol.% und vorzugsweise höchstens 0,05 Vol.% beträgt. Es empfiehlt sich, mindestens einen Teil des gebrauchten Waschwassers durch die Leitung (10) abzuziehen und es zusammen mit dem zu behandelnden wäßrigen Kondensat dem Abscheider (2) zuzuführen. Im Abscheider (2) freigesetzte Gase zieht man in der Leitung (11) ab.

Die Beheizung (13) der Kolonne (7) kann durch indirekten wärmeaustausch, wie in der Zeichnung angedeutet, oder alternativ durch Einspeisen von Wasserdampf erfolgen. Im Sumpf der Kolonne (7) fällt ein gereinigtes Abwasser an, das man in der Leitung (12) abzieht und vorzugsweise durch den Wärmeaustauscher (4) führt. Ein Teil dieses Abwassers kann auch als Waschwasser in der Leitung (8) verwendet werden.

Die Verwendung des Abwassers der Leitung (12) zum Anwärmen eines Teilstroms des zu behandelnden Kondensats spart Energie für die Beheizung der Kolonne (7). Die Mündung der Leitung (5) in die Kolonne (7), durch welche ein kalter Teilstrom des Kondensats in die Kolonne gelangt, liegt über der Mündung der Leitung (6), die angewärmtes Kondensat in die Kolonne führt. Das relativ kalte Kondensat der Leitung (5) dient hierbei in erwünschter Weise der Kondensation von Dämpfen in der Kolonne (7).

Durch einen Seitenabzug (15) wird ungefähr aus dem mittleren Bereich der Kolonne (7) ein NH₃-reiches Gas- und Dampfgemisch mit einer Temperatur im Bereich von 110 bis 200°C und vorzugsweise 140 bis 170°C aus der Entsäuerungskolonne (7) abgezogen. Im Rieselkühler (16) wird das Gemisch mit im Kreislauf durch die Leitung (17), den Kühler (18) und die Leitung (19) geführtem Kondensat in direkten Kontakt gebracht. Ein verbleibender Restgasstrom verläßt den Rieselkühler (16) in der Leitung (20) und wird der Kolonne (7) zugeführt. Die Einmündung der Leitung (20) in die Kolonne (7) liegt üblicherweise oberhalb des Seitenabzugs (15) und vorzugsweise unterhalb der Einmündung der Leitung (5). Alternativ kann das NH₃-reiche Gas- und Dampfgemisch zunächst durch die gestrichelte Leitung (15a) zum unteren Bereich der NH₃-Reinigungskolonne (22) geleitet werden, wo es der Beheizung durch indirekten Wärmeaustausch dient, bevor es in den Rieselkühler (16) geleitet wird. In diesem Fall entfällt die Leitung (15).

Zum Gewinnen des NH₃ zweigt man einen Teilstrom des aus dem Kühler (18) kommenden Kondensats in der Leitung (21) ab und speist es in die NH₃-Reinigungskolonne (22) ein. Diese Kolonne weist ebenso wie die Entsäuerungskolonne (7) und der Rieselkühler (16) den Gas-Flüssigkeits-Kontakt intensivierende Stoffaustauschelemente oder flüssigkeitsdurchlässige Böden auf. Durch die Beheizung (23), die mit indirektem Wärmeaustausch oder alternativ mit direkter Einspeisung von Wasserdampf arbeitet, werden aus dem Kondensat NH₃ und ein gewisser Teil der verbliebenen Sauergase ausgetrieben. Das Gasgemisch wird im oberen Teil der Kolonne (22) durch zwei mit umlaufendem wäßrigem Ammoniak betriebene Waschstufen (24) und (25) geführt, zu denen die Kühler (24a) und (25a) gehören. Frisches Waschwasser wird in der Leitung (26) herangeführt. Am Kopf der Kolonne (22) zieht man in der Leitung (27) NH₃-Gas ab, das weitgehend frei von Sauergasen ist und höchstens 0,1 Vol.% dieser Sauergase enthält.

Im Sumpf der Kolonne (22) fällt eine Lösung mit einer Temperatur im Bereich von 50 bis 100°C und vorzugsweise höchstens 80°C an, die man in der Leitung (28) abzieht und oberhalb des Seitenabzugs (15) in die Entsäuerungskolonne (7) leitet. Diese Lösung enthält üblicherweise Salze und vor allem Ammoniumcarbonat und/oder Ammoniumsulfid.

### Beispiel

In einer der Zeichnung entsprechenden Anlage ohne die Leitung (15a) wird ein Kondensat behandelt, das aus der Kühlung eines Produktgases einer Kohlevergasung stammt. Bevor das Kondensat in der Leitung (1) in die Anlage eintritt, wird es durch Schwerkrafttrennung von Teer, Öl und Staub befreit. Im Abscheider (2) wird ein weiterer Teil der Kohlenwasserstoffe aus dem Kondensat entfernt. In der nachfolgenden Tabelle bedeutet A die Gesamtmenge (in kg/h) an Flüssigkeit oder Gas in der jeweiligen Leitung, dazu sind die Gehalte an NH₃, CO₂, H₂S, H₂O und Kohlenwasserstoffen (in kg/h) angegeben, ferner Druck und Temperatur in der jeweiligen Leitung.

**Tabelle**

| (KW = Kohlenwasserstoffe) | | | | | | | | |
|---|---|---|---|---|---|---|---|---|
| Leitung | 1 | 3 | 5 | 6 | 8 | 9 | 10 | 12 |
| NH₃ | 500 | - | 54 | 558 | - | - | 112 | 1 |
| CO₂ | 1107 | - | 125 | 1283 | - | 1107 | 301 | - |
| H₂S | 95 | - | 13 | 136 | - | 95 | 54 | - |
| H₂O | 100000 | - | 10000 | 102725 | 2000 | 4 | 12725 | 102238 |
| KW | 100 | 59 | 5 | 53 | - | 41 | 17 | - |
| Druck (bar) | 2,0 | 2,0 | 10,6 | 10,7 | 10,5 | 10,5 | 10,6 | 11,1 |
| Temperatur (°C) | 35 | 35 | 35 | 140 | 35 | 41 | 82 | 184 |
| A | 101802 | 59 | 10197 | 104755 | 2000 | 1247 | 13209 | 102239 |

| Leitung | 15 | 17 | 19 | 20 | 21 | 26 | 27 | 28 |
|---|---|---|---|---|---|---|---|---|
| NH₃ | 4001 | 66002 | 62203 | 202 | 3799 | - | 499 | 3299 |
| CO₂ | 198 | 3405 | 3209 | 2 | 196 | - | - | 196 |
| H₂S | 305 | 5264 | 4961 | 2 | 303 | - | - | 303 |
| H₂O | 7236 | 125384 | 118168 | 20 | 7216 | 250 | 8 | 7459 |
| KW | - | - | - | - | - | - | - | - |
| Druck (bar) | 10,7 | 10,7 | 10,7 | 10,7 | 10,7 | 3,0 | 3,0 | 3,3 |
| Temperatur (°C) | 165 | 110 | 80 | 106 | 80 | 35 | 40 | 66 |
| A | 11740 | 200055 | 188541 | 226 | 11514 | 250 | 507 | 11257 |

## Patentansprüche

1. Verfahren zur Entsäuerung eines wäßrigen Kondensats, das Ammoniak und mindestens eines der Sauergase H₂S und CO₂ enthält, wobei man aus dem Kondensat in einer im unteren Bereich beheizten Entsäuerungskolonne bei einem Druck von 2 bis 30 bar Sauergase mit Wasserdampf austreibt und im oberen Bereich der Entsäuerungskolonne aufsteigende Gase und Dämpfe mit Waschwasser in direkten Kontakt bringt, man am Kopf der Entsäuerungskolonne weitgehend ammoniakfreies Sauergas mit einem NH₃-Gehalt von höchstens 1,0 Vol.%, H₂O-frei gerechnet, ableitet, und aus dem mittleren Bereich der Entsäuerungskolonne durch einen Seitenabzug unterhalb des Zulaufs des Kondensats ein NH₃-reiches Gas- und Dampfgemisch abzieht, dadurch gekennzeichnet, daß man das NH3-reiche Gas- und Dampfgemisch durch den Seitenabzug mit einer Temperatur im Bereich von 110 bis 200°C abzieht, das Gas- und Dampfgemisch soweit kühlt, daß mindestens 90 Vol.% des Gemisches kondensieren, wobei ammoniakreiches Kondensat und ein Restgasstrom gebildet werden, daß man das ammoniakreiche Kondensat einer NH₃-Reinigungskolonne aufgibt, die im unteren Bereich beheizt wird und in welcher ein Druck im Bereich von 1 bis 10 bar herrscht, daß man im oberen Bereich der NH₃-Reinigungskolonne aufsteigende Gase und Dämpfe mit wäßrigem Ammoniak in direkten Kontakt bringt und am Kopf der Reinigungskolonne NH₃ weitgehend frei von Sauergasen ableitet, daß man aus dem Sumpf der NH₃-Reinigungskolonne eine Lösung mit einer Temperatur im Bereich von 50 bis 100°C abzieht, die man in die Entsäuerungskolonne leitet, und daß man den Restgasstrom in die Entsäuerungskolonne leitet.

2. Verfahren nach Anspruch 1, dadurch gekennzeichnet, daß man das aus der Entsäuerungskolonne abgezogene Gas- und Dampfgemisch durch direkten Kontakt mit im Kreislauf geführtem, ammoniakreichem Kondensat kühlt und den Restgasstrom ableitet.

3. Verfahren nach Anspruch 2, dadurch gekennzeichnet, daß man das aus der Entsäuerungskolonne abgezogene Gas- und Dampfgemisch zunächst zum indirekten Beheizen des unteren Bereichs der NH₃-Reinigungskolonne verwendet und das Gas- und Dampfgemisch dann durch direkten Kontakt mit im Kreislauf geführtem, ammoniakreichem Kondensat weiter kühlt.

4. Verfahren nach Anspruch 1, dadurch gekennzeichnet, daß man aus dem oberen Bereich der Entsäuerungskolonne gebrauchtes Waschwasser abzieht und die in diesem enthaltenen organischen Verbindungen in einem Abscheider entfernt.

## Claims

1. A method for deacidifying an aqueous condensate which contains ammonia and at least one of the acid gases H₂S and CO₂, in which acid gases are expelled from the condensate in a deacidification column heated in the lower region at a pressure of 2 to 30 bar using water vapour and in the upper region of the deacidification column rising gases and vapours are brought into direct contact with washing water, largely ammonia-free acid gas having an NH₃ content of at most 1.0% by volume, calculated free of H₂O, is branched off at the top of the deacidification column, and an NH₃-rich gas and vapour mixture is removed from the middle region of the deacidification column through a side outlet beneath the inlet for the condensate, characterised in that the NH₃-rich gas and vapour mixture is withdrawn through the side outlet at a temperature in the range from 110 to 200°C, the gas and vapour mixture is cooled until at least 90% by volume of the mixture condenses, with ammonia-rich condensate and a residual gas stream being formed, that the ammonia-rich condensate is fed to an NH₃ purification column which is heated in the lower region and in which there is a pressure in the range from 1 to 10 bar, that in the upper region of the NH₃ purification column rising gases and vapours are brought into direct contact with aqueous ammonia and at the top of the purification column NH₃ is branched off largely free of acid gases, that a solution having a temperature in the range from 50 to 100°C is removed from the sump of the NH₃ purification column and is passed into the deacidification column, and that the residual gas stream is passed into the deacidification column.

2. A method according to Claim 1, characterised in that the gas and vapour mixture removed from the deacidification column is cooled by direct contact with circulated ammonia-rich condensate and the residual gas stream is branched off.

3. A method according to Claim 2, characterised in that the gas and vapour mixture removed from the deacidification column is first used for indirectly heating the lower region of the NH₃ purification column and the gas and vapour mixture is then further cooled by direct contact with circulated ammonia-rich condensate.

4. A method according to Claim 1, characterised in that spent washing water is removed from the upper region of the deacidification column and the organic compounds contained therein are removed in a separator.

## Revendications

1. Procédé de désacidification d'un condensat aqueux, qui contient de l'ammoniac et au moins un des gaz acides H₂S et CO₂, en entraînant avec de la vapeur d'eau, des gaz acides du condensat dans une colonne de désacidification chauffée dans la partie inférieure, à une pression de 2 à 30 bars, et en mettant en contact direct les gaz et les vapeurs ascendant dans la partie supérieure de la colonne de désacidification avec de l'eau de lavage, en récupérant en tête de la colonne de désacidification un gaz acide essentiellement exempt d'ammoniac avec une teneur en NH₃ d'au maximum 1,0 % volumique, calculé sous forme exempte de H₂O, et en prélevant de la partie moyenne de la colonne de désacidification, un mélange de gaz et de vapeur riche en NH₃ par une conduite d'évacuation latérale en dessous de l'entrée du condensat, caractérisé en ce qu'on prélève le mélange de gaz et de vapeur riche en NH₃ par la conduite d'évacuation latérale à une température dans la gamme de 110 à 200 °C, en ce qu'on refroidit le mélange de gaz et de vapeur de telle façon qu'au moins 90 % volumiques du mélange se condensent, processus par lequel on forme un condensat riche en ammoniac et un flux de gaz résiduel, en ce qu'on introduit le condensat riche en ammoniac dans une colonne d'épuration de NH₃, qui est chauffée dans la partie inférieure et dans laquelle règne une pression dans la gamme de 1 à 10 bars, en ce qu'on met en contact direct les gaz et les vapeurs ascendant dans la partie supérieure de la colonne d'épuration de NH₃ avec de l'ammoniac aqueux et en ce qu'on évacue, en tête de colonne d'épuration, du NH₃ essentiellement exempt de gaz acides, en ce qu'on prélève du bas de la colonne d'épuration de NH₃ une solution à une température dans la gamme de 50 à 100 °C, qui est introduite dans la colonne de désacidification et en ce qu'on fait passer le flux de gaz résiduel dans la colonne de désacidification.

2. Procédé selon la revendication 1, caractérisé en ce qu'on refroidit le mélange de gaz et de vapeur prélevé de la colonne de désacidification par contact direct avec du condensat recirculé riche en ammoniac et en ce qu'on évacue le flux de gaz résiduel.

3. Procédé selon la revendication 2, caractérisé en ce qu'on utilise le mélange de gaz et de vapeur prélevé de la colonne de désacidification d'abord pour le chauffage indirect de la partie inférieure de la colonne d'épuration de NH₃ et en ce qu'on refroidit ensuite davantage le mélange de gaz et de vapeur par contact direct avec du condensat recirculé riche en ammoniac.

4. Procédé selon la revendication 1, caractérisé en ce qu'on prélève, de la partie supérieure de la colonne de désacidification, de l'eau de lavage usée et en ce qu'on élimine les composés organiques qui y sont contenus dans un séparateur.
